# EUROPÄISCHE PATENTSCHRIFT

(11) **EP 1 030 986 B1**
(45) Veröffentlichungstag und Bekanntmachung des Hinweises auf die Patenterteilung: **04.02.2004**
(21) Anmeldenummer: 99936278.3
(22) Anmeldetag: 12.05.1999
(51) Int. Cl.: F16J 15/08

(54) **VORRICHTUNG ZUR ABDICHTUNG**
SEALING DEVICE
DISPOSITIF POUR REALISER UNE ETANCHEITE

(30) Priorität: 19.06.1998 DE 19828896
(43) Veröffentlichungstag der Anmeldung: 30.08.2000
(73) Patentinhaber: MANNESMANN Aktiengesellschaft, 40213 Düsseldorf (DE)
(72) Erfinder: STARKE, Wilfried, D-59320 Ennigerloh (DE)
(74) Vertreter: Berger, Helmut
(86) Internationale Anmeldenummer: PCT/DE1999/001498
(87) Internationale Veröffentlichungsnummer: WO 1999/067554

(56) Entgegenhaltungen:
- EP-A- 0 689 010
- DE-A- 2 502 240
- DE-A- 19 521 915
- DE-C- 4 204 516

## Beschreibung

Die Erfindung betrifft eine Vorrichtung zur Abdichtung der Berührungszone zwischen zwei relativ zueinander beweglichen Anlagenteilen, von denen der eine ein Absperrelement und der andere einen Dichtsitz bildet.

Vorrichtungen dieser Art dienen insbesondere dazu, zwischen einem beweglichen Absperrelement (z.B. einem Schwenkflügel oder einer Schieberplatte) einer in eine Heißgasrohrleitung großer Abmessung eingebauten Absperreinrichtung und einem ortsfesten Sitz im Gehäuse dieser Absperreinrichtung eine zuverlässige gasdichte Abdichtung zu gewährleisten. Solche Heißgasrohrleitungen weisen vielfach Durchmesser oder Querschnittsdiagonalen von mehreren Metern Größe auf.

Aus der DE 195 21 916 A1 ist eine gattungsgemäße Vorrichtung zur Abdichtung der Berührungszone zwischen einem beweglichen Absperrelement und einem ortsfesten Sitz bekannt. Diese Vorrichtung enthält ein Dichtungselement, das aus einem Federstahlblechstreifen gebildet ist und wahlweise an dem beweglichen Absperrelement oder an dem ortsfesten Dichtsitz oder auch an beiden befestigt sein kann. Es erstreckt sich entlang der Berührungszone von Dichtsitz und Absperrelement und ist hohlprofilförmig in der Weise gebogen, daß der Federstahlblechstreifen im Bereich der Berührungszone konvex nach außen gewölbt ist. Die Wölbung wird üblicherweise durch eine entsprechende Verformung im elastischen Bereich des Federstahlwerkstoffs erzeugt. Die beiden Längskanten des Federstahlblechstreifens bilden Spannränder, die jeweils an einem der beiden Anlagenteile (Dichtsitz oder Absperrelement) mit einem Abstand zueinander, der mindestens 10% der Breite des Dichtungselements beträgt, fest eingespannt sind. Die Spannränder weisen jeweils zur selben Seite und liegen parallel zueinander. Im montierten Zustand weist der Federstahlblechstreifen außer der durch elastische Verformung hervorgerufenen Krümmung im Bereich der bogenförmigen Dichtzone noch zwei Biegungen um jeweils 90% auf, die durch plastische Verformung des Federstahlblechstreifens erzeugt wurden. Entweder sind beide Biegungen in dem Bereich zwischen einem der beiden Spannränder und der bogenförmigen Dichtzone angeordnet und sind mit einem gegenläufigen Winkel abgewinkelt oder aber sie sind auf verschiedenen Seiten zwischen der bogenförmigen Dichtzone und dem jeweiligen Spannrand angeordnet und weisen zur gleichen Seite. Der Abstand zwischen den beiden parallelen Spannrändern, die mittels einer Klemmleiste festgespannt werden, wird durch ein zwischen die Spannräder gelegtes Stützelement gewährleistet, das je nach Anordnung der Biegungen entlang eines oder aber entlang beider Spannränder entweder als L-Profil bzw. als einfaches Flacheisen ausgeführt ist. Damit liegt dieses Stützelement im Inneren des von dem durch den gebogenen Federstahlblechstreifen gebildeten Hohlraums. Durch das Stützelement soll bei dieser bekannten Vorrichtung ein Abheben des Federstahlblechstreifens während des Schließvorgangs des Absperrelements vermieden werden. Diese Vorrichtung ist nämlich speziell für solche Einsatzfälle vorgesehen, bei denen während des Schließens des Absperrelements starke tangentiale Reibungskräfte zur gewölbten Dichtzone auftreten. Die eigentliche Dichtkraft verläuft wie üblich in senkrechter Richtung zur Dichtzone.

Ein aus einem Federstahlblechstreifen gebildetes Hohlprofil mit elastisch gewölbter Dichtzone ist auch aus der DE 38 15 402 A1 bekannt. Diese Vorrichtungen werden insbesondere zur Abdichtung in Rauchgasrohrleitungen verwendet. Bei den üblichen Abmessungen des Federstahlblechstreifens ist dessen Elastizität im Bereich der bogenförmig gekrümmten Dichtungszone derartig, daß Federwege bis zu etwa 10mm möglich sind. Das bedeutet, daß die thermischen Dehnungen infolge des Temperatureinflusses des heißen Rauchgases an der Absperreinrichtung bei Absperrelementen von bis zu 3x3 m Größe kompensiert werden könne. Nicht mehr ausreichend ist das Kompensationsvermögen dieser bekannten Dichtvorrichtung bei sehr großen Rauchgaskanalquerschnitten von beispielsweise 5x7m.

Eine geeignete Dichtvorrichtung für Rauchgasarmaturen muß nicht nur genügend Elastizität, also genügend Federweg zum Ausgleich der zu erwartenden thermischen Dehnungen aufweisen, sondern muß darüber hinaus auch eine ausreichende Steifigkeit besitzen. Im unbelasteten Zustand, d.h. im Falle des Nichtanliegens des Absperrelements, ist die Dichtvorrichtung nämlich der außerordentlich starken Strömung des Rauchgases ausgesetzt. Bei zu geringer Steifigkeit führt das strömende Rauchgas zu Eigenschwingungen der Dichtvorrichtung, die diese auf die Dauer zerstören.

Aufgabe der vorliegenden Erfindung ist es, eine gattungsgemäße Vorrichtung zur Abdichtung so zu gestalten, daß erheblich größere Federwege als bisher, insbesondere Federwege bis zu 30mm, möglich sind, um extrem starke thermische Dehnungen kompensieren zu können, ohne daß die Steifigkeit der Dichtung in unzulässiger Weise abnimmt.

Gelöst wird diese Aufagbe für eine gattungsgemäße Vorrichtung mit den kennzeichnenden Merkmalen des Patentanspruchs 1. Vorteilhafte Weiterbildungen der Erfindung sind in den Unteransprüchen 2 bis 12 angegeben.

Ausgehend von der gattungsgemäßen Abdichtungsvorrichtung sieht die Erfindung zwar die Beibehaltung einer gebogenen Dichtungszone vor. Der Federstahlblechstreifen ist aber im Bereich der Dichtungszone im wesentlichen durch plastische Verformung in Form eines Dachfirstes mit sich beidseitig anschließenden Dachflächen gebogen, während bei der bekannten Dichtvorrichtung eine elastisch gebogene Dichtungszone vorliegt. Die Dachflächen sind vorzugsweise im wesentlichen eben ausgebildet, können aber auch eine leichte Wölbung nach innen oder außen aufweisen. In einem solchen Fall weist die Biegung des Dachfirstes allerdings neben der plastischen Verformung auch eine gewisse Komponente an elastischer Verformung auf. Die beiden Dachflächen stehen erfindungsgemäß in einem Winkel von etwa 60° bis 160° zueinander, vorzugsweise in einem Winkel von 90° bis 130° und besonders bevorzugt in einem Winkel von 105° bis 115°. An der dem Dachfirst abgewandten Längskante der beiden Dachflächen weist der Federstahlblechstreifen der erfindungsgemäßen Abdichtvorrichtung jeweils eine weitere durch plastische Verformung erzeugte und nach außen hin konvexe Biegung auf. An diese konvexe Biegung schließt sich jeweils eine zumindest in einem ersten Teilstück im wesentlichen ebene Seitenfläche an, wobei an der freien Längskante dieser Seitenfläche jeweils der Spannrand angeordnet ist. Vorzugsweise sind die beiden Spannränder parallel zueinander gerichtet. Dies ist allerdings kein zwingend notwendiges Merkmal. Die Spannränder könnten beispielsweise auch schräg aufeinander zulaufen. Als Abstand der beiden Spannränder würde in einem solchen Fall derjenige Abstand gelten, der am Anfang des Spannrandes, also in dem der Dichtungszone am nächsten liegenden Bereich des Spannrandes vorliegt.

Der Abstand er beiden Spannränder voneinander muß mindestens 10%, vorzugsweise mindestens 20% und besonders bevorzugt mindestens 30% der Breite des Dichtungselements betragen. Die Breite des Dichtungselements ist der Abstand der einander gegenüberliegenden konvexen Biegungen an den dem Dachfirst abgewandten Längskanten der beiden Dachflächen. Zweckmäßigerweise wird dieser Abstand nach oben auf 50% der Breite des Dichtungselements begrenzt. Es ist aber auch möglich, den Abstand der beiden Spannränder größer zu machen, beispielsweise genau so groß wie die Breite des Dichtungselements. In einem solchen Fall können die beiden sich an die Dachflächen anschließenden Seitenflächen jeweils vollständig eben und parallel zueinander gerichtet ausgebildet sein. Die bevorzugte Ausführungsform sieht jedoch vor, im Bereich der Seitenflächen jeweils eine weitere Biegung anzuordnen, die allerdings nach außen hin nicht konvex, sondern konkav geformt ist. Auch diese weitere Biegung, die in Längsrichtung des Federstahlblechstreifens verläuft, wird durch eine plastische Verformung angebracht.

Um den gewünschten Abstand der beiden Spannränder voneinander einzuhalten, wird zweckmäßigerweise der Zwischenraum zwischen den beiden Spannrändern durch ein Voll- oder Hohlprofil mit rechteckigem Querschnitt ausgefüllt. Der rechteckige Querschnitt gewährleistet den parallelen Verlauf der beiden Spannränder. Bei kleineren Abständen empfiehlt sich die Verwendung eines Vollprofils, während für größere Abmessungen insbesondere zur Gewichtseinsparung ein Hohprofil vorteilhafter ist. Vorzugsweise würden die beiden Spannränder zwischen einem solchen Voll- oder Hohlprofil und zwei Klemmleisten eingespannt, die parallel zu diesem Profil angelegt werden und z.B. mittels Schrauben verspannt werden. In diesem Zusammenhang ist es besonders empfehlenswert, die eine der beiden Klemmleisten mit einfachen Durchgangsbohrungen für die verwendeten Schrauben zu versehen, während die andere Klemmleiste mit Gewindebohrungen ausgestattet wird, so daß die zum Verspannen eingesetzten Schrauben jeweils durch entsprechende Durchgangslöcher der einen Klemmleiste, der beiden Spannränder und des zwischen den Spannrändern liegenden Profils hindurchgesteckt und in die Gewindebohrung der anderen Klemmleiste eingeschraubt werden können. Auf diese Weise kann die Abdichtvorrichtung mit geringstmöglichem Aufwand fertig vormontiert werden. Die verwendeten Schrauben sollten dabei um eine freie Gewindelänge durch die Gewindebohrungen hindurchragen, damit diese freie Gewindelänge zur Befestigung am jeweiligen Anlagenteil der Rauchgasarmatur, also an dem feststehenden Dichtsitz oder an dem bewegten Klappenflügel, mittels einer zusätzlichen Mutter befestigt werden kann.

Zweckmäßigerweise weisen die verwendeten Klemmleisten an der an dem jeweiligem Spannrand anliegenden Seite jeweils eine gerundete Längskante auf. Dadurch läßt die Einspannstelle eine sanftere Verformung des Federstahlblechstreifens zu. Vorzugsweise wird die Spannleiste jeweils so angelegt, daß die gerundete Längskante im Bereich der konkaven Biegung des Federstahlblechstreifens liegt. Zur Erhöhung der Steifigkeit der erfindungsgemäßen Abdichtvorrichtung kann vorgesehen sein, das ebene Teilstück der Seitenflächen der konvexen und der konkaven Biegung über einen Teilbereich nach außen abzustützen, indem beispielsweise die jeweilige Spannleiste bis in diesen Bereich hinein verlängert und nicht als Flachstab, sondern als entsprechendes Winkelprofil ausgebildet wird. Alternativ ist beispielsweise auch der Einbau federelastischer Stützbleche möglich.

Durch die erfindungsgemäße Abdichtvorrichtung wird mit überraschend einfachen Mitteln eine außerordentlich leistungsfähige Dichtung für Rauchgasarmaturen für sehr große Rauchgaskanäle bereitgestellt. Die Vorrichtung ist nicht nur leicht vormontierbar, sondern kann auch mit einfachen Mitteln endmontiert werden. Durch die Ermöglichung sehr großer Federwege lassen sich auch extreme Temperaturdehnungen infolge des Rauchgaseinflusses sicher beherrschen. Darüber hinaus besitzt die erfindungsgemäße Abdichtvorrichtung eine so hohe Federsteifigkeit, daß unzulässige Eigenschwingungen infolge der starken Rauchgasströmung unter bleiben.

Nachfolgend wird die Erfindung anhand der in den Figuren dargestellten Ausführungsbeispiele näher erläutert. Es zeigen:
- Fig. 1: eine erste Ausführungsform der erfindungsgemäßen Abdichtvorrichtung im Querschnitt im unbelasteten und im belasteten Zustand,
- Fig. 2: eine Abwandlung derAbdichtvorrichtung aus Fig. 1,
- Fig. 3: eine Abdichtvorrichtung mit vollständig ebenen Seitenwänden und
- Fig. 4: eine Abdichtvorrichtung gemäß Fig. 1 in montiertem Zustand.

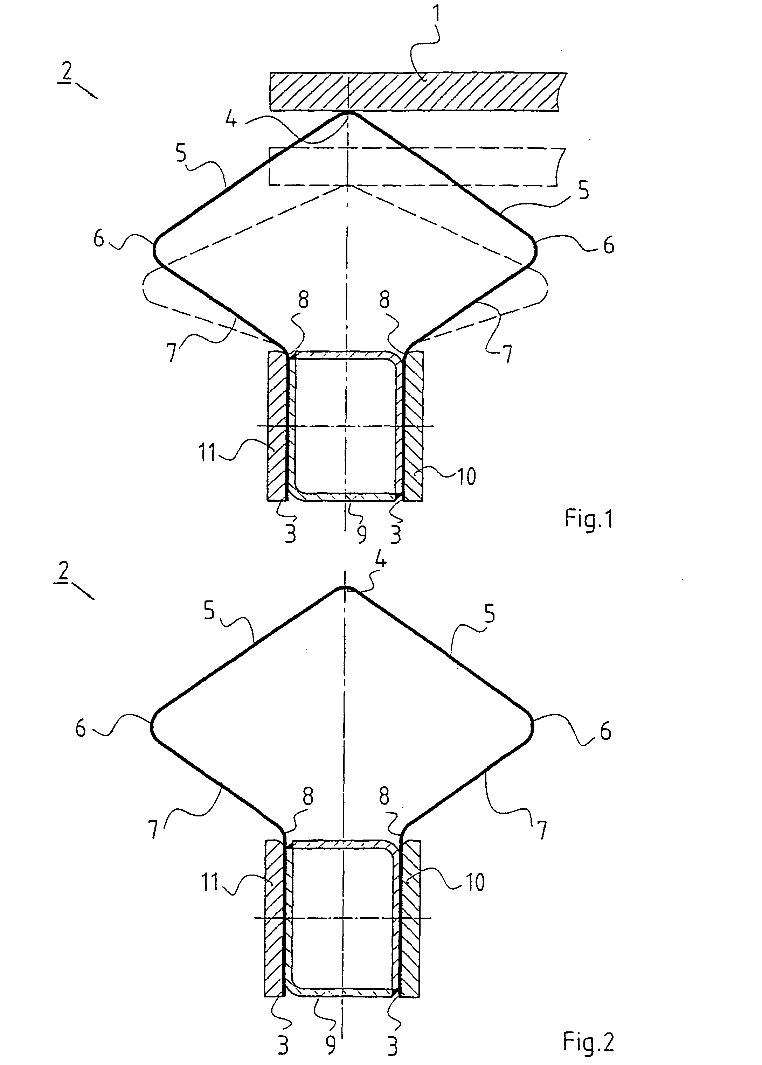

Die Fig. 1 zeigt eine erfindungsgemäße Abdichtvorrichtung im Querschnitt. Der unbelastete Zustand ist dabei mit durchgezogenen Linien dargestellt, während die eingetretene Verformung im temperaturbelasteten Zustand gestrichelt angedeutet ist. Wesentliches Element der erfindungsgemäßen Vorrichtung ist der als dicke Linie dargestellte Federstahlblechstreifen 2. Dieser weist in seinem oberen Teil eine Dichtungszone 4 auf, die in der Art eines Dachfirstes mit zwei ebenen Dachflächen 5 ausgebildet ist. Die Biegung der Dichtungszone 4 ist durch plastische Verformung des Federstahlblechstreifens 2 erzeugt worden. An den der Dichtungszone abgewandten Längskanten der Dachflächen 5 ist jeweils eine weitere nach außen konvexe Biegung 6 angeordnet. An diese schließen sich jeweils Seitenflächen 7 an, die in einem ersten Teilstück eben geformt sind. Die beiden Spannränder des Federstahlblechstreifens sind mit dem Bezugszeichen 3 bezeichnet und sind planparallel zueinander ausgerichtet. Hierzu ist in den Seitenflächen 7 jeweils eine weitere Biegung 8 angebracht, die ebenfalls durch plastische Verformung erzeugt wurde, aber nicht konvex, sondern nach außen hin konkav geformt ist. Um die Spannränder 3 auf den gewünschten Abstand zueinander zu bringen, ist zwischen diesen ein rechteckiges Hohlprofil 9 eingelegt worden. An den Außenseiten der beiden Spannränder 3 liegt jeweils eine Klemmleiste 10 bzw. 11 an, so daß die Spannränder 3 zwischen dem Hohlprofil 9 und den Klemmleisten 10, 11 beispielsweise mittels Schraubverbindungen eingeklemmt werden können. Der Federstahlblechstreifen 2 bildet auf diese Weise ein Hohlprofil, dessen Querschnitt im wesentlichen rautenförmig gestaltet ist und dessen Spannränder gleichsam einen Fuß an einer Ecke der Raute des Querschnitts bilden, so daß eine einfache Montage der Abdichtvorrichtung möglich ist. Im dargestellten Ausführungsbeispiel weisen die beiden Klemmleisten 10, 11 jeweils eine abgerundete Längskante auf, deren Rundungsradius dem Rundungsradius der konkaven Biegung 8 angepaßt ist. Die beiden Klemmleisten 10, 11 reichen mit ihrer gerundeten Längskante bis in den Bereich der Biegung 8. Mit dem Bezugszeichen 1 ist ein Stück eines Absperrelements bezeichnet worden, das unter Ausübung einer Dichtkraft an der gekrümmten Dichtungszone 4 anliegt. In gestrichelter Form ist die Situation der Verformung des Federstahlblechstreifens 2 durch eine starke thermische Dehnung dargestellt worden. Unter dem Druck des Absperrelements 1 wird die Dichtungszone 4 nach unten verschoben, so daß es einerseits zu einer Vergrößerung des Winkels im Bereich des Dachfirstes und andererseits zu einer Verkleinerung der Winkel im Bereich der beiden Biegungen 6 kommt. Man erkennt deutlich, daß die erfindungsgemäße Abdichtvorrichtung trotz ihrer kompakten Bauweise einen sehr großen Federweg zuläßt. Die Federsteifigkeit ist dabei aber noch zu groß, daß trotz großer Rauchgasgeschwindigkeiten keine unzulässigen Schwingungen des Federstahlblechstreifens 2 eintreten, die zu seiner vorzeitigen Zerstörung führen könnten.

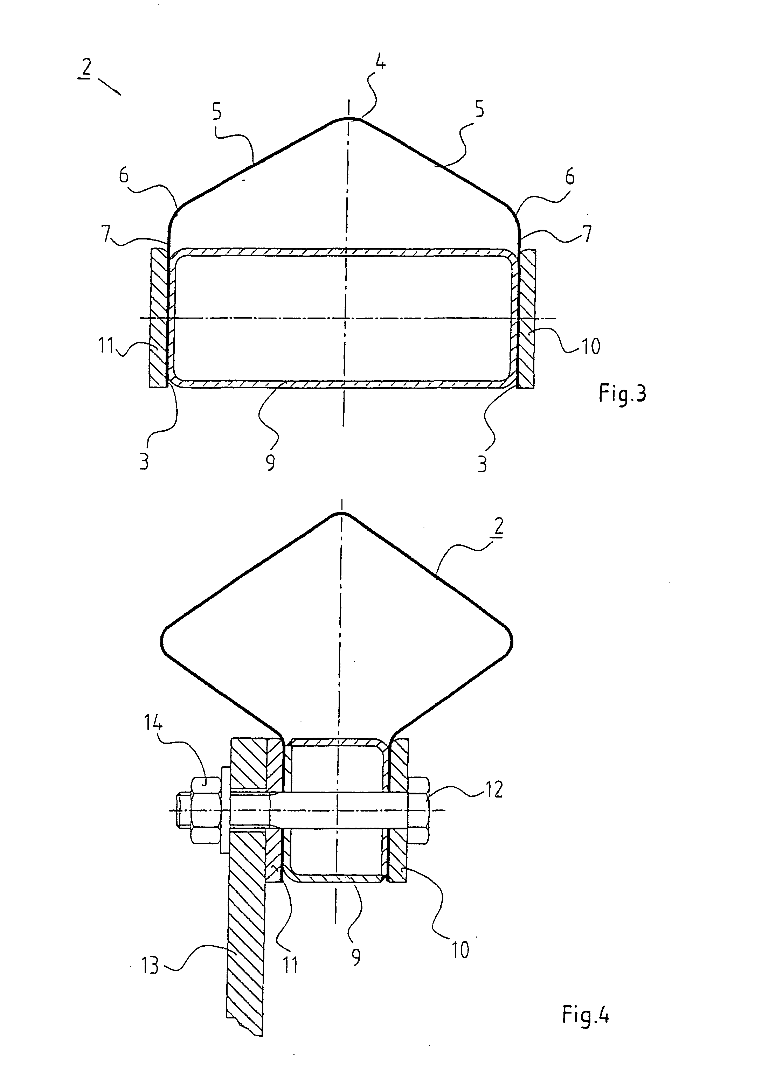

Die in Fig. 2 dargestellte Dichtvorrichtung gleicht weitestgehend der Ausführungsform der Fig. 1. Sie unterscheidet sich lediglich darin, daß die beiden Klemmleisten 10, 11 mit ihrem gerundeten Kanten nicht bis in den Bereich der konkaven Biegungen hineinreichen, sondern kurz davor enden. Auf diese Weise kann die Federsteifigkeit gezielt verringert werden. Umgekehrt könnte die Federsteifigkeit bei Bedarf bei Verwendung des gleichen Federstahlblechstreifens 2 deutlich erhöht werden, wenn die beiden Klemmleisten 10, 11, beispielsweise in Form eines der Kontur des Federstahlblechstreifens 2 angepaßten Winkelprofils nach oben hin in den Bereich der Seitenflächen 7 hinein verlängert würden. Durch eine Verringerung des Abstandes der beiden Spannränder 3 voneinander wird ebenfalls eine Verringerung der Federsteifigkeit erzielt, während die Vergrößerung dieses Abstandes zu einer Erhöhung der Federsteifigkeit führt. Ein Extremfall in dieser Hinsicht ist in Fig. 3 dargestellt. Hierbei haben die beiden Spannränder 3 einen Abstand voneinander, der der Breite des Dichtungselements entspricht. Die beiden Seitenflächen 7 sind jeweils vollständig eben ausgeführt, weisen also keine konkave Biegung auf.

In Fig. 4 ist die erfindungsgemäße Abdichtvorrichtung, deren Ausführung der Fig. 1 entspricht, im montierten Zustand dargestellt. Die Spannränder des Federstahlblechstreifens 2 sind mittels einer Schraube 12 zwischen den beiden Klemmleisten 10, 11 und dem dazwischen angeordneten Hohlprofil 9 eingespannt. Während in der Klemmleiste 10 und in dem Hohlprofil 9 lediglich einfache Durchgangsbohrungen für die Schraube 12 vorgesehen sind, weist die Klemmleiste 11 eine für das Gewinde der Schraube 12 passende Gewindebohrung auf. Dadurch kann die Abdichtvorrichtung ohne Verwendung einer gesonderten Mutter in vormontierter Form bereitgestellt werden. Üblicherweise wird diese Dichtung in vorgegebene Teillängen von z.B. 2m Länge angefertigt und erst bei der Montage zur gewünschten Gesamtlänge in der jeweiligen Rauchgasarmatur zusammengesetzt. Das Anlagenteil, an dem die Abdichtvorrichtung angebracht werden soll, ist in Fig. 4 mit dem Bezugszeichen 13 versehen. Es weist wie das Hohlprofil 9 und die Klemmleiste 10 eine für die Schraube 12 geeignete Durchgangsbohrung auf. Die Schraube 12 ist wesentlich länger ausgeführt, als dies an sich zur Verschraubung mit der Gewindebohrung in der Klemmleiste 11 notwendig wäre. Daher können die freien Enden der Schraube 12 in diese Durchgangsbohrungen am Anlagenteil 13 eingesteckt und mittels Muttern 14 fest mit diesem verspannt werden.

### Bezugszeichenliste

- 1: Absperrelement
- 2: Federstahlblechstreifen
- 3: Spannränder
- 4: Dichtungzone
- 5: Dachflächen
- 6: Biegung (konvex)
- 7: Seitenfläche
- 8: Biegung (konkav)
- 9: Hohlprofil
- 10: Klemmleiste
- 11: Klemmleiste
- 12: Schraube
- 13: Anlagenteil
- 14: Mutter

## Patentansprüche

1. Vorrichtung zur Abdichtung der Berührungszone zwischen zwei relativ zueinander beweglichen Anlagenteilen, von denen der eine ein Absperrelement
(1) und der andere einen Dichtsitz bildet, enthaltend wenigstens ein Dichtungselement, das durch einen sich entlang der Berührungszone erstreckenden Federstahlblechstreifen (2) gebildet ist, der hohlprofilförmig gebogen ist und dessen beide Längskanten Spannränder (3) bilden, die an einem der beiden Anlagenteile mit einem Abstand zueinander, der mindestens 10% der Breite des Dichtungselements beträgt, eingespannt sind, wobei das Dichtungselement in der Schließstellung des Absperrelements mit einer gegenüber dem Dichtsitz konvex gekrümmten Dichtungszone (4) durch Federwirkung mit einer Dichtkraft an dem Dichtsitz anliegt,
**dadurch gekennzeichnet,**
- **daß** die Dichtungszone (4) des Federstahlblechstreifens (2) durch plastische Verformung in Form eines Dachfirstes mit sich beidseitig anschließenden Dachflächen (5) gebogen ist,
- **daß** die beiden Dachflächen (5) in einem Winkel von 60° bis 160° zueinander ausgerichtet sind und
- **daß** an der dem Dachfirst abgewandten Längskante der beiden Dachflächen (5) jeweils eine weitere durch plastische Verformung erzeugte, nach außen hin konvexe Biegung (6) angebracht ist, an die sich eine zumindest in einem ersten Teilstück ebene Seitenfläche (7) anschließt, an deren freien Längskante jeweils der Spannrand (3) angeordnet ist.

2. Vorrichtung nach Anspruch 1
**dadurch gekennzeichnet,**
**daß** die Flächen der Spannränder (3) parallel zueinander angeordnet sind.

3. Vorrichtung nach einem der Ansprüche 1 bis 2
**dadurch gekennzeichnet,**
**daß** in den beiden Seitenflächen (7) jeweils eine weitere Biegung (8) in Längsrichtung des Federstahlblechstreifens (2) durch plastische Verformung angebracht ist, die nach außen hin konkav ausgebildet ist.

4. Vorrichtung nach einem der Ansprüche 1 bis 3
**dadurch gekennzeichnet,**
**daß** die beiden Dachflächen (5) in einem Winkel von 90° bis 130°, insbesondere in einem Winkel von 105° bis 115°, zueinander ausgerichtet sind.

5. Vorrichtung nach einem der Ansprüche 1 bis 4
**dadurch gekennzeichnet,**
**daß** der Abstand der beiden Spannränder (3) voneinander mindestens 20%, insbesondere mindestens 30%, der Breite des Dichtungselements beträgt.

6. Vorrichtung nach einem der Ansprüche 1 bis 5
**dadurch gekennzeichnet,**
**daß** der Abstand der beiden Spannränder (3) voneinander höchstens 50% der Breite des Dichtungselements beträgt.

7. Vorrichtung nach einem der Ansprüche 1 bis 6
**dadurch gekennzeichnet,**
**daß** der Raum zwischen den beiden Spannrändern (3) durch ein Voll- oder Hohlprofil (9) mit rechteckigem Querschnitt ausgefüllt ist.

8. Vorrichtung nach Anspruch 7
**dadurch gekennzeichnet,**
**daß** die beiden Spannränder (3) zwischen dem Voll- oder Hohlprofil (9) und zwei Klemmleisten (10, 11) eingespannt sind.

9. Vorrichtung nach Anspruch 8
**dadurch gekennzeichnet,**
**daß** die Einspannungen als Schraubverbindungen ausgeführt sind, wobei die eine Klemmleiste (10) jeweils Durchgangsbohrungen und die andere Klemmleiste (11) jeweils Gewindebohrungen für die Schrauben (12) aufweisen und die Schrauben (12) zur Befestigung des Dichtungselements an einem der Anlagenteile (13) mittels einer Mutter (14) um eine freie Gewindelänge durch die Gewindebohrungen hindurchragen.

10. Vorrichtung nach einem der Ansprüche 8 bis 9
**dadurch gekennzeichnet,**
**daß** die Klemmleisten (10, 11) an der an dem Spannrand (3) anliegenden Seite jeweils eine gerundete Längskante aufweisen.

11. Vorrichtung nach Anspruch 10
**dadurch gekennzeichnet,**
**daß** die gerundete Längskante jeweils im Bereich der konkaven Biegung (8) des Federstahlblechstreifens (2) liegt.

12. Vorrichtung nach einem der Ansprüche 3 bis 11
**dadurch gekennzeichnet,**
**daß** das ebene Teilstück der Seitenflächen (7) zwischen der konvexen (6) und der konkaven Biegung (8) zur Erhöhung der Federsteifigkeit über einen Teilbereich von außen abgestützt ist.

## Claims

1. A device for sealing the contact zone between two equipment parts movable relatively to each other, one of which forms a shut-off element (1) and the other forming a sealing seat, containing at least one sealing element, which is formed by a spring steel sheet metal strip (2) extending along the contact zone, which is bent forming a hollow section shape, both longitudinal edges of which form tension rims (3), which are mounted on one of the two equipment parts with a distance of separation which is at least 10% of the width of the sealing element, wherein the sealing element in the closed position of the shut-off element, with a sealing area (4) convexly curved relatively to the sealing seat, is applied against the sealing seat by a spring action with a sealing force,
**characterized in that**,
- the sealing area (4) of the spring steel sheet metal strip (2) is bent by plastic deformation into the shape of a roof ridge with roof surfaces (5) joined to each other on both sides,
- both roof surfaces (5) are oriented relatively to each other with an angle from 60° to 160° and
- on the longitudinal edge turned away from the roof ridge of both roof surfaces (5), a further outwardly convex bend (6) produced by plastic deformation is respectively provided, to which is adjoined a side surface (7) at least plane in a first section, on the free longitudinal edge of which is respectively positioned the tension rim (3).

2. The device according to claim 1,
**characterized in that**,
the surfaces of the tension rims (3) are positioned parallel to each other.

3. The device according to any of claims 1 to 2,
**characterized in that**,
in both side surfaces (7) a further bend (8) is provided by plastic deformation in the longitudinal direction of the spring steel sheet metal strip (2) which is formed as outwardly concave.

4. The device according to any of claims 1 to 3,
**characterized in that**,
both roof surfaces (5) are oriented relatively to each other with an angle from 90° to 160°, especially with an angle from 105° to 115°.

5. The device according to any of claims 1 to 4,
**characterized in that**,
the distance between both tension rims (3) is at least 20%, especially at least 30% of the width of the sealing element.

6. The device according to any of claims 1 to 5,
**characterized in that**,
the distance between both tension rims (3) is at most 50% of the width of the sealing element.

7. The device according to any of claims 1 to 6,
**characterized in that**,
the space between both tension rims (3) is filled by a full or hollow section (9) with a rectangular cross section.

8. The device according to claim 7,
**characterized in that**,
both tension rims (3) are mounted between the full or hollow section (9) and two clamping strips (10, 11).

9. The device according to claim 8,
**characterized in that**,
the mountings are embodied as screw connections, one of the clamping strips (10) respectively has through bores and the other clamping strip (11) respectively has tapped bores for the screws (12) and the screws (12) for fixing the sealing element on one of the system parts (3) by means of a nut (14) protrude by one free threaded length through the tapped bores.

10. The device according to any of claims 8 to 9
**characterized in that**,
the clamping strips (10, 11) on the side adjacent to the tension rim (3) respectively has a rounded longitudinal edge.

11. The device according to claim 10
**characterized in that**,
the rounded longitudinal edge respectively lies in the area of the concave bend (8) of the spring steel sheet metal strip (2).

12. The device according to any of claims 3 to 11
**characterized in that**,
the plane section of the side surfaces (7) between the convex (6) and concave bend (8) is supported over a sectional area from the outside for increasing the spring stiffness.

## Revendications

1. Dispositif pour l'étanchéité de la zone de contact entre deux parties d'installation mobiles l'une par rapport à l'autre, dont l'une constitue un élément d'obturation (1) et l'autre un siège étanche, contenant au moins un élément d'étanchéité, qui est formé par une bande de tôle d'acier à ressort (2) s' étendant le long de la zone de contact, qui est pliée en forme de profilé creux et dont les deux arêtes longitudinales forment des bords de serrage (3), qui sont fixés sur l'une des deux parties d'installation avec un espacement entre eux qui correspond au moins à 10 % de la largeur de l'élément d'étanchéité, l'élément d'étanchéité s'appuyant dans la position de fermeture de l'élément d'obturation avec une zone d'étanchéité (4) à courbure convexe par rapport au siège étanche sous l'effet d'un ressort avec une force d'étanchéité sur le siège étanche, **caractérisé en ce que**
- la zone d'étanchéité (4) de la bande de tôle d'acier à ressort (2) est pliée par déformation plastique sous la forme d'un faîtage avec des surfaces de toit (5) se raccordant des deux côtés,
- les deux surfaces de toit (5) sont orientées en formant un angle de 60° à 160° l'une par rapport à l'autre et
- sur chaque arête longitudinale, opposée au faîtage, des deux surfaces de toit (5) est disposée une autre pliure (6) générée par déformation plastique et convexe en direction de l'extérieur, à laquelle se raccorde une surface latérale (7) plane au moins dans un premier tronçon, surface sur l'arête longitudinale libre de laquelle est disposé le bord de serrage (3).

2. Dispositif selon la revendication 1,
**caractérisé en ce que**
les surfaces des bords de serrage (3) sont disposées parallèlement les unes par rapport aux autres.

3. Dispositif selon l'une quelconque des revendications 1 à 2,
**caractérisé en ce que**
dans chacune des deux surfaces latérales (7) est disposée une autre pliure (8) dans le sens longitudinal de la bande de tôle d'acier à ressort (2) par déformation plastique, qui est conçue de façon concave en direction de l'extérieur.

4. Dispositif selon l'une quelconque des revendications 1 à 3,
**caractérisé en ce que**
les deux surfaces de toit (5) sont orientées l'une par rapport à l'autre en formant un angle de 90° à 130°, en particulier un angle de 105° à 115°.

5. Dispositif selon l'une quelconque des revendications 1 à 4,
**caractérisé en ce que**
l'espacement des deux bords de serrage (3) correspond à au moins 20 %, en particulier au moins 30 %, de la largeur de l'élément d'étanchéité.

6. Dispositif selon l'une quelconque des revendications 1 à 5,
**caractérisé en ce que**
l'espacement des deux bords de serrage (3) correspond à au maximum 50 % de la largeur de l'élément d'étanchéité.

7. Dispositif selon l'une quelconque des revendications 1 à 6,
**caractérisé en ce que**
l'espace entre les deux bords de serrage (3) est rempli par un profilé plein ou un profilé creux (9) avec une section rectangulaire.

8. Dispositif selon la revendication 7,
**caractérisé en ce que**
les deux bords de serrage (3) sont fixés entre le profilé plein ou le profilé creux (9) et deux baguettes de blocage (10, 11).

9. Dispositif selon la revendication 8,
**caractérisé en ce que**
les fixations sont réalisées sous la forme d'assemblages vissés, une baguette de blocage (10) et l'autre baguette de blocage (11) présentant respectivement des alésages de passage et des alésages filetés pour les vis (12) et les vis (12) pour la fixation de l'élément d'étanchéité débordant sur l'une des partes d'installation (13) au moyen d'un écrou (14) d'une longueur libre de filetage à travers les alésages filetés.

10. Dispositif selon l'une quelconque des revendications 8 à 9,
**caractérisé en ce que**
les baguettes de blocage (10, 11) présentent chacune une arête longitudinale arrondie sur le côté venant s'appuyer sur le bord de serrage (3) .

11. Dispositif selon la revendication 10,
**caractérisé en ce que**
l'arête longitudinale arrondie est disposée respectivement dans la zone de la pliure (8) concave de la bande de tôle d'acier à ressort (2).

12. Dispositif selon l'une quelconque des revendications 3 à 11,
**caractérisé en ce que**
le tronçon plat des surfaces latérales (7) est soutenu par l'extérieur entre la pliure convexe (6) et la pliure concave (8) pour améliorer la rigidité élastique au moyen d'une zone partielle.
